# EUROPÄISCHE PATENTSCHRIFT

(11) **EP 0 962 041 B1**
(45) Veröffentlichungstag und Bekanntmachung des Hinweises auf die Patenterteilung: **16.01.2002**
(21) Anmeldenummer: 97947018.4
(22) Anmeldetag: 15.10.1997
(51) Int. Cl.: H02K 1/14

(54) **ELEKTRISCHE MASCHINE MIT EINER EINZELPOLWICKLUNG**
ELECTRICAL MACHINE WITH A SINGLE POLE WINDING
MACHINE ELECTRIQUE A ENROULEMENT UNIPOLAIRE

(30) Priorität: 22.10.1996 DE 19643561
(43) Veröffentlichungstag der Anmeldung: 08.12.1999
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: DE9702457
(87) Internationale Veröffentlichungsnummer: WO9818189

(56) Entgegenhaltungen:
- WO-A-82/04505
- WO-A-95/12912
- FR-A- 2 593 974
- US-A- 3 495 106
- US-A- 3 891 881
- US-A- 4 603 274
- US-A- 5 300 845
- PATENT ABSTRACTS OF JAPAN vol. 096, no. 002, 29.Februar 1996 & JP 07 264791 A (MITSUBA ELECTRIC MFG CO LTD), 13.Oktober 1995,
- PATENT ABSTRACTS OF JAPAN vol. 006, no. 016 (E-092), 29.Januar 1982 & JP 56 136162 A (HITACHI LTD;OTHERS: 01), 24.Oktober 1981,
- PATENT ABSTRACTS OF JAPAN vol. 012, no. 003 (E-570), 7.Januar 1988 & JP 62 163536 A (SHIBAURA ENG WORKS CO LTD), 20.Juli 1987,
- PATENT ABSTRACTS OF JAPAN vol. 014, no. 507 (E-0998), 6.November 1990 & JP 02 209703 A (MATSUSHITA ELECTRIC IND CO LTD), 21.August 1990,
- PATENT ABSTRACTS OF JAPAN vol. 015, no. 250 (E-1082), 26.Juni 1991 & JP 03 078458 A (RICOH CO LTD), 3.April 1991,
- PATENT ABSTRACTS OF JAPAN vol. 011, no. 325 (E-551), 22.Oktober 1987 & JP 62 114455 A (HITACHI LTD), 26.Mai 1987,
- PATENT ABSTRACTS OF JAPAN vol. 096, no. 012, 26.Dezember 1996 & JP 08 223898 A (COPAL CO LTD), 30.August 1996,

## Beschreibung

Die Erfindung betrifft eine elektrische Maschine mit einer Einzelpolwicklung gemäß dem Oberbegriff der Ansprüche 1 und 4 sowie Verfahren zu deren Herstellung.
Elektrische Maschinen, insbesondere EC-Aussenläufer mit kleiner Leistung, weisen vorteilhaft einzeln bewickelte Pole auf. Einzelpolwicklungen vermeiden Überschneidungen von Leitem unterschiedlicher Phasen und können so sehr kompakt gewickelt werden.

In der ***DE-AS 1 033 769*** wird ein Rotor für eine dynamoelektrische Maschine beschrieben, dessen Einzelpole durch schwalbenschwanzförmige Vorsprünge am Kern befestigt werden.

Aus der ***DE 42 13 377 A1*** ist ein bürstenloser Gleichstrommotor mit Innenläufer bekannt in dem der Stator aus L-förmigen Segmenten zusammengesetzt wird, die in eine auf einen stemförmigen Kunststoffkörper gewickelte Wicklung eingesteckt werden.

In der ***DE 44 36 257 A1*** wird ein Schenkelpolläufer einer dynamoelektrische Maschine beschrieben, der durch Zusammenschieben und Verkeilen zweier klauenförmiger Hälften hergestellt wird. Durch das Fehlen jedes zweiten Pols in den Läuferhälften wird das direkte Bewickeln der in Schichtblechtechnik ausgeführten Erregerpole vereinfacht. Alle Pole sind symmetrisch über den Umfang verteilt und baugleich ausgeführt.

Weiterhin sind aus der ***DE 40 04 019 A1*** Stapelspulen bekannt, die trotz der mit dem Radius abnehmenden Nutbreite einen hohen Nutfüllfaktor ermöglichen. Die Herstellung dieser Stapelspulen ist sehr aufwendig und für ihre Montage sind offene Nuten erforderlich, die wiederum Pulsationsverluste oder Kosten für die Herstellung und Montage von weichmagnetischen Nutkeilen verursachen.

In der ***WO-A-95 12912*** wird eine Einzelpolmaschine beschrieben deren Stator aus einphasigen, mehrpoligen Sektoren besteht. In der Lücke zwischen den einphasigen Sektoren sind unbewickelte Zwischenpole angeordnet. Den Polspulen steht jeweils nur der Raum einer Polteilung zur Verfügung, den sie sich mit dem Polkem teilen. Benachbarte Polspulen teilen sich eine Nut und bilden in der Nutmitte einen Hohlraum. Die Polspulen werden auf einem Spulenkörper aufgewickelt und ihre Anzahl entspricht nahezu der Polzahl des Rotors.

Der Erfindung liegt daher die **Aufgabe** zugrunde, eine elektrische Maschine mit einer Einzelpolwicklung und ein Verfahren zu ihrer Herstellung derart weiter zu bilden, daß bei vorgegebener Baugröße die Verluste gesenkt werden und gleichzeitig eine einfache kostengünstige Herstellung ermöglicht wird.

Diese Aufgabe wird durch die in den Ansprüchen 1, 4, 8, 9 und 10 aufgeführten Merkmale der Erfindung gelöst.

Erfindungsgemäß wird der die Einzelpole ausbildende Körper aus weichmagnetischen Segmenten zusammengesetzt, wobei diese vorzugsweise aus in axialer Richtung geschichteten Blechen bestehenden Segmente an den die Nutwand bildeten Oberflächen Rillen aufweisen, die eine exakte Führung des Leiterdrahtes beim Wickeln der Polspulen ermöglicht.

Der erste Lösungsansatz besteht somit darin durch eine strukturierte Oberfläche des Polkerns eine definierte Lage der Windungen zu erreichen und dabei nur dünne Isolierschichten zwischen den Leitern und dem Polkern zu realisieren. Hierdurch wird eine gute Wärmeableitung der Wicklungsverluste in den Polkern und ein hoher Nutfüllfaktor erreicht.

Zusätzlich können in definierten Lagen überlappungsfrei aufgewickelte Rund- oder Profildrähte durch anschließendes Pressen in die gewünschte Form weiter verdichtet werden. Ausgehend von einer in den Vertiefungen des Polkerns definiert verlegten ersten Spulenlage erzeugt eine präzis arbeitende Wickelmaschine eine reproduzierbare Spulenoberfläche und schafft damit die Voraussetzung für die nachfolgende Verdichtung und raumsparende Montage in der Maschine.

Ergänzend oder alternativ ermöglicht auch der zweite - im Anspruch 4 beschriebene - Lösungsansatz eine gute Raumausnutzung in mehrphasigen Maschinen mit Einzelpolwicklung und führt gleichzeitig zu einer Verminderung der Verluste und der Herstellungskosten. Hierbei wird der vorzugsweise ringförmige weichmagnetische Körper aus zwei Segmentbauformen zusammengesetzt, die in Umfangsrichtung abwechselnd angeordnet sind.

Die Polteilung der ersten Segmentbauformen - im folgenden als T-Segment bezeichnet - entspricht in etwa der Polteilung des am Luftspalt gegenüberliegenden Körpers. Die Polteilung der zweiten Segmentbauform - im folgenden als X-Segment bezeichnet - ist dagegen um den der Phasenanzahl entsprechenden Bruchteil der Polteilung größer oder kleiner. Das X-Segment realisiert den Phasenversatz am Umfang aufeinanderfolgender T-Segmente und gewährleistet gleichzeitig eine magnetisch homogen wirkende Luftspaltoberfläche des weichmagnetischen Körpers. Während das T-Segment den Spulenkern bildet, füllt das X-Segment den Raum zwischen zwei benachbarten Leiterspulen aus und ist vorzugsweise derart gestaltet, daß den Wärmewiderstand erhöhende Hohlräume vermieden werden.

Die Spulen können als Drahtspulen vorzugsweise direkt auf das T-Segment aufgewickelt oder als mit Backlack verfestigte Profildrahtspulen auch in einer Vorrichtung vorgefertigt werden. Das T-Segment leitet den magnetischen Fluß hauptsächlich in Richtung der Nuttiefe und kann daher vorteilhaft aus kornorientiertem Material hergestellt werden. Dagegen übernimmt das X-Segment auch die Flußführung in Richtung der Nutbreite und besteht daher vorzugsweise aus verlustarmen Elektroblech ohne Vorzugsrichtung.

In den Zeichnungen sind vorteilhafte Ausführungsformen der Erfindung dargestellt.
- ***Fig*. *1***: zeigt den Stanzschnitt eines Polsegments,
- ***Fig*. *2***: zeigt die Draufsicht auf ein Stirnkopfelement,
- ***Fig. 3***: zeigt den Querschnitt eines bewickelten Polelementes vor dem Verpressen,
- ***Fig. 4***: zeigt den Querschnitt eines bewickelten Polelementes nach dem Verpressen,

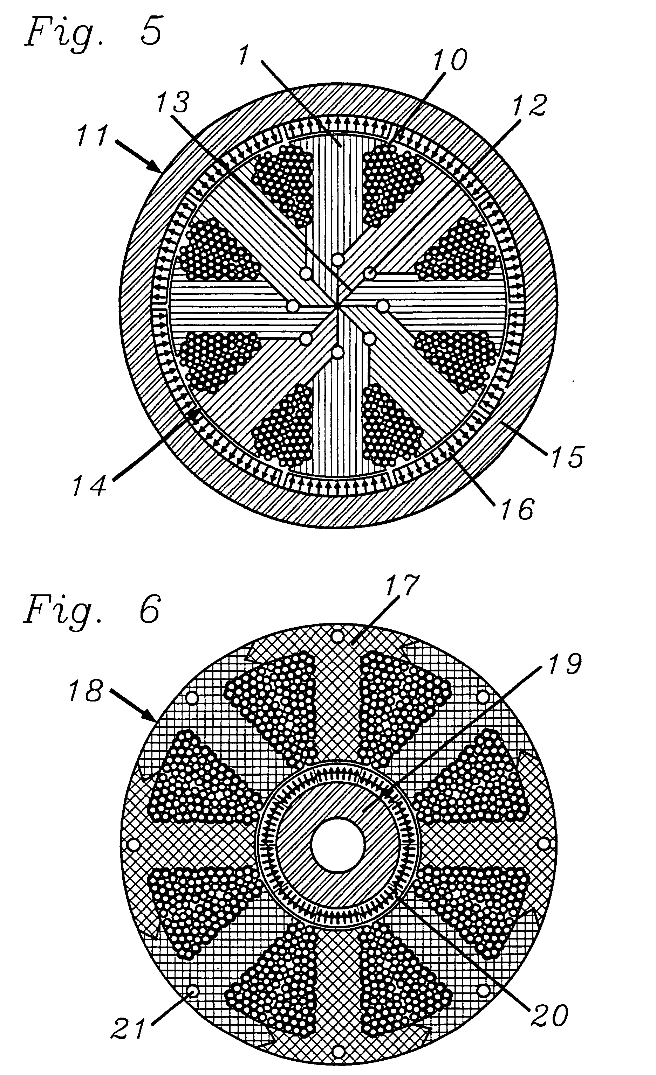

- ***Fig. 5***: zeigt den Querschnitt eines 10-poligen, vierphasigen EC-Aussenläufers,
- ***Fig. 6***: zeigt den Querschnitt eines 10-poligen, vierphasigen EC-Innenläufers,
- ***Fig*. *7***: zeigt den Querschnitt eines 14-poligen, dreiphasigen EC-Aussenläufers,
- ***Fig*. *8***: zeigt Komponenten aus Fig. 7 bei der Montage.

Der in ***Fig*. *1*** dargestellte Stanzschnitt eines Polsegments **1**, weist die für den ersten Lösungsansatz der Erfindung typische Rillen **2** in den Kanten zum Nutraum hin auf. Die Rillen der Nutoberfläche **3** dienen der Führung der Leiterdrähte **4**. Die Oberfläche ist derart strukturiert, daß die erste Lage der Polwicklung eine optimale Ausgangslage zur Erzeugung einer trapezförmigen Spule **5** bildet.

Ergänzend zu dieser Führung der innersten Wicklungslage sind auf den Stirnseiten der Polsegmente **1** Stirnkopfelemente **6** aus Kunststoff aufgeklebt, die ebenfalls Rillen **7** aufweisen, um den Leiterdraht **4** definiert zu führen.

In ***Fig*. *2*** ist eines der beiden zugehörigen Stirnkopfelemente **6** dargestellt, wobei unten die Drahtzuführung **8** erkennbar ist und die übrigen Rillen **7** einen definierten Spurwechsel des Drahtes **4** erzwingen. Das gegenüberliegende Stirnkopfelement führt den Draht in der gleichen radialen Höhe um das Polende.

Mit Hilfe der das Polsegment **1** schraubenförmig umschließenden Rillen **2**, **7** kann die erste Lage der Einzelpolspule **5** sehr exakt und straff direkt auf dem Polsegment **1** gewickelt werden. Hierbei können die Rillen **2**, **7** verschieden breit und tief ausgeführt sein, so daß die Drähte **4** in einer Lage unterschiedliche Abstände zueinander aufweisen.

***Fig*. *3*** zeigt einen Schnitt durch das Polsegment **1** unmittelbar nach dem Bewickeln, wobei relativ dicker Runddraht **4** in einem streng vorgegeben Muster verlegt ist.

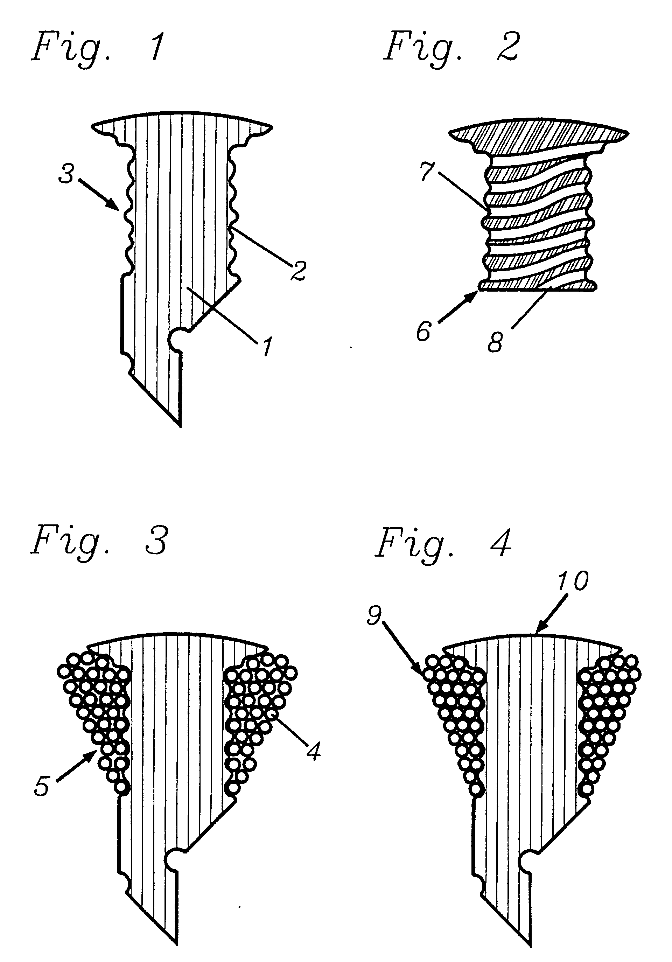

***Fig*. 4** zeigt das bewickelte Polsegment **1** aus Fig. 3 nachdem die Spule **5** in einer Preßvorrichtung auf die gewünschten Außenabmessungen verdichtet wurde. Hierbei werden die Runddrähte **4** verformt, um glatte Oberflächen **9** zu erreichen. Zusätzlich zum exakten Verlegen des Drahtes wird durch das Verpressen eine weitere Steigerung des Nutfüllfaktors erreicht und dadurch die Wicklungsverluste bei gleicher Baugröße reduziert. Die Polsegmente werden vorzugsweise aus kornorientiertem Elektroblech hergestellt.

Die entsprechend Fig. 1 bis 4 vorgefertigten Elektropole **10** sind Bauteile eines vierphasigen, 10-poligen EC-Aussenläufermotors **11**, dessen Querschnitt in ***Fig*. *5*** dargestellt wird.

Die Polsegmente **1** nutzen den Raum bis zur Achsmitte zur Führung des magnetischen Flusses. Nach der Montage werden dünne Haltestifte in die Aussparungen **12** an den Stoßsstellen **13** der Polsegmente axial eingesteckt und gewährleisten so einen stabilen Zusammenhalt des segmentierten Stators **14**. Das rotierende Gehäuse **15** dient gleichzeitig als magnetischer Rückschluß für die Permanentmagnete **16.**

Alternativ können vorgefertigte Polsegmente **17** auch radial außerhalb des Luftspaltes eingesetzt werden. ***Fig*. *6*** zeigt beispielhaft den Querschnitt eines vierphasigen 10-poligen EC-Innenläufers **18,** wobei auf der Hohlwelle **19** aus Siliziumeisen ein radial-vielpolig magnetisierter Permanetmagnetring **20** aufgeklebt ist. Für hohe Drehzahlen werden die Polsegmente **19** aus Hochfrequenzblech gestanzt und weisen eine Flußdichte nahe der Flußdichte im ringförmigen Magneten **20** (z.B. 1 T) auf. Nur die Löcher **21** für die Haltestifte im Jochbereich sind in der Querschnittszeichnung Bereiche, die nicht elektromagnetisch genutzt werden.

In ***Fig*. *7*** ist eine ringförmige dreiphasige EC-Maschine **22** entsprechend dem zweiten Grundgedanken der Erfindung dargestellt. Den vierzehn baugleichen Permanentmagneten **23,** die gleichmäßig verteilt in das Rotorjoch **24** eingeklebt sind, liegen am Luftspalt **25** zwölf Polsegmente - jeweils sechs T-Segmente **26** und 6 X-Segmente **27** - gegenüber. Die Polsegmente **26, 27** decken am Luftspalt **25** nahezu die gesamte Oberfläche ab. Die gestreift schraffierten T-Segmente **26** bestehen vorzugsweise aus Trafoblech und stecken in der vorgefertigten Profildrahtwicklung **29**. Die aus Dynamoblech gestanzten X-Segmente **27** sind gekreuzt schraffiert. Sie erzeugen durch ihre größere tangentiale Breite den Phasenversatz und sind an den Nutflächen **28** derart ausgestaltet, daß sie bei der Montage die Profildrahtspulen **29** in einer definierten Lage drücken und durch flächiges Anliegen einen gute Wärmeableitung sowie geringe Wicklungsgeräusche gewährleisten.

Nach der Montage der Polsegmente **26, 27** und Profildrahtspulen **29 -** wie in ***Fig*. *8*** dargestellt - wird der Statorring **30** auf ein mehreckiges Trägerrohr **31** gesteckt und mit einer dünnen Bandage **32** aus faserverstärktem Band versehen. Nach dem Imprägnieren ist der Stator dann ausreichend verfestigt und kann den magnetischen Kräften des Rotors ausgesetzt werden.

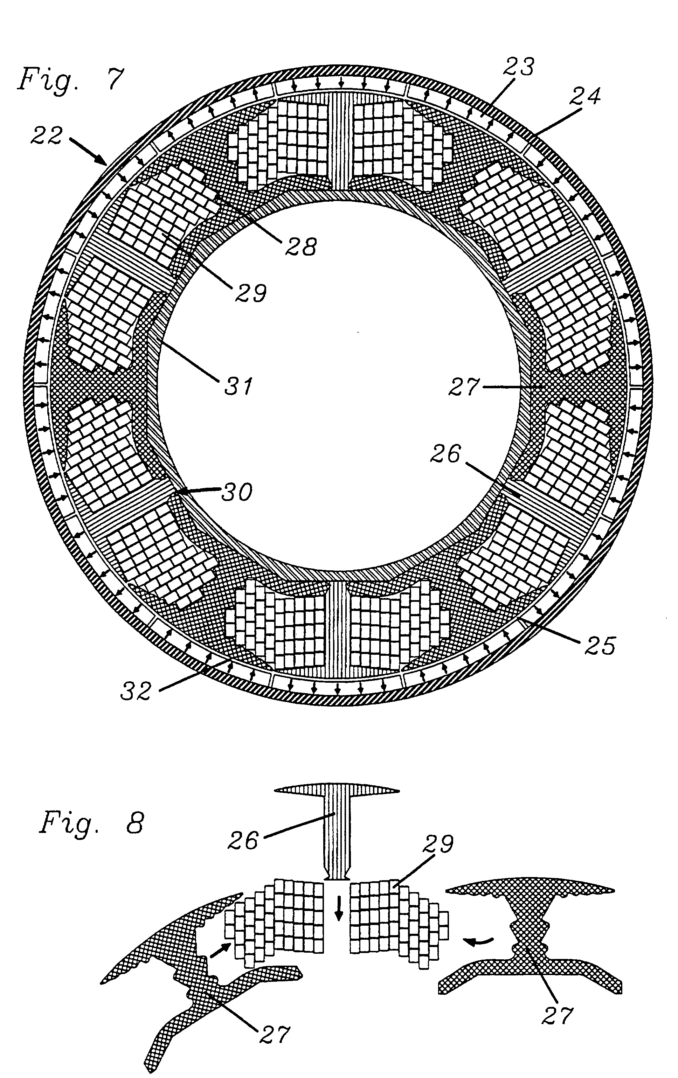

Alternativ zu Fig. 7 können die X-Segmente auch nur Zweidrittel der Rotorpolteilung am Luftspalt abdecken, wodurch den 12 Statorpolen nur 10 Rotorpole gegenüberliegen. Die Erfindung ist auch für Innenläufer, Axialflußmaschinen und Linearmotoren sowie für Maschinen mit elektrischer Erregung oder nach dem Reluktanzprinzip anwendbar.

## Patentansprüche

1. Elektrische Maschine mit einer Einzelpolwicklung, und einem aus Polsegmenten (1, 19, 26, 27) zusammengesetzten weichmagnetischen Körper,
**dadurch gekennzeichnet, daß** die den Nutraum begrenzenden Oberflächen (3) der Polsegmente (1, 19) Rillen aufweisen und in diesen Rillen (2, 28) Leiterdrähte (4) angeordnet sind.

2. Elektrische Maschine mit einer Einzelpolwicklung nach Anspruch 1,
**dadurch gekennzeichnet, daß** an den Stirnseiten der Polsegmente (1, 19, 26) Stirnkopfelemente (6) mit Vertiefungen (7) angebracht sind und diese Vertiefungen den Draht (4) führen.

3. Elektrische Maschine mit einer Einzelpolwicklung nach Anspruch 1, wobei die Polsegmente (1) radial innerhalb des Luftspaltes angeordnet sind,
**dadurch gekennzeichnet, daß** die Polsegmente (1) an ihren radial inneren Enden zusammenstoßen und dabei an den Stoßstellen (13) Kontaktflächen (12) aufweisen in denen Haltestifte eingesteckt sind.

4. Elektrische Maschine mit einer Einzelpolwicklung, und einem aus Polsegmenten zusammengesetzten weichmagnetischen Körper,
**dadurch gekennzeichnet, daß** benachbarte Polsegmente (26, 27) mit unterschiedlicher Polteilung ausgeführt sind und nur eines von zwei benachbarten Polsegmenten (26, 27) von einer Spule umschlossen wird, wobei die Polteilung von einem dieser beiden Polsegmente (27) in etwa der Polteilung des am Luftspalt gegenüberliegenden Körpers entspricht und die Polteilung des benachbarten Polsegments (26) größer oder kleiner ist.

5. Elektrische Maschine mit einer Einzelpolwicklung nach Anspruch 4,
**dadurch gekennzeichnet, daß** die Polteilung jedes zweiten Polsegments (26) um den der Phasenanzahl entsprechenden Bruchteil der Polteilung des gegenüberliegenden Körpers kleiner ist, als die Polteilung des jeweils ersten Polsegments (27).

6. Elektrische Maschine mit einer Einzelpolwicklung nach Anspruch 4,
**dadurch gekennzeichnet, daß** das von der Spule umschlossene Polsegment (26) aus kornorientierten Blechen besteht und am Luftspalt eine Fläche ausbildet, die in etwa der Fläche der Pole des gegenüberliegenden Körpers entspricht.

7. Elektrische Maschine mit einer Einzelpolwicklung nach Anspruch 4,
**dadurch gekennzeichnet, daß** die von der Polteilung des am Luftspalt gegenüberliegenden Körpers abweichenden Polsegmente (27) den Raum zwischen zwei benachbarten Spulen ausfüllen und einen Großteil des Joches bilden.

8. Verfahren zur Herstellung einer elektrischen Maschine mit einer Einzelpolwicklung und einem aus Polsegmenten (1) zusammengesetzten weichmagnetischen Körper,
**dadurch gekennzeichnet, daß** die Polspule nach dem Aufwickeln des Leiterdrahtes in einer Vorrichtung in eine definierte Form gepreßt wird, wobei die anschließend im Nutraum liegenden Leiterdrähte verdichtet werden.

9. Verfahren zur Herstellung einer elektrischen Maschine mit einer Einzelpolwicklung und einem aus Polsegmenten (1) zusammengesetzten weichmagnetischen Körper,
**dadurch gekennzeichnet, daß** der Draht beim Wickeln der ersten Lage einer Polspule von Rillen im Polkern geführt wird.

10. Verfahren zur Herstellung einer elektrischen Maschine mit einer Einzelpolwicklung und einem aus Polsegmenten (1) zusammengesetzten weichmagnetischen Körper,
**dadurch gekennzeichnet, daß** bewickelte Polsegmente (26) mit unbewickelten Polsegmenten (27) in Richtung der Nutbreite abwechselnd zu einem kompakten Körper zusammengesteckt werden, wobei die Polteilung benachbarter Polsegmente (26,27) unterschiedlich ist.

## Claims

1. Electric machine with a single pole winding and a soft magnetic body that is composed of pole segments (1, 19, 26, 27),
wherein the surfaces (3) of said pole segments (1, 19) that are bordering the slot space have grooves (2, 28) in which conductor wires (4) are arranged.

2. Electric machine with a single pole winding in accordance with claim 1,
wherein front elements (6) with grooves (7) are attached to the face sides of the pole segments (1, 19, 27) and said grooves track the wire (4).

3. Electric machine with a single pole winding in accordance with claim 1,
wherein said pole segments (1) are arranged radially within the air gap, said pole segments (1) have radially abutting inner ends and, at the locations of the joints (13), have contact surfaces (12) into which locking pins are inserted.

4. Electric machine with a single pole winding and a soft magnetic body that is composed of pole segments,
wherein adjacent pole segments (26, 27) are executed with a different pole pitch and only one of two adjacent pole segments (26, 27) is enclosed by a coil, and said pole pitch of one of these two pole segments (27) is corresponding approximately to the pole pitch of the body oppositely arranged at the air gap and the pole pitch of the adjacent pole segment (26) is greater or smaller.

5. Electric machine with a single pole winding in accordance with claim 4,
wherein the pole pitch of every other pole segment (26) is smaller by a fraction of the pole pitch of the oppositely arranged body than the pole pitch of the remaining pole segments (27) and said fraction is corresponding to the phase number.

6. Electric machine with a single pole winding in accordance with claim 4,
wherein the pole segment (26) that is enclosed by a coil is composed of grain oriented sheet and forms a surface at the air gap that corresponds approximately to the surface of the poles of the oppositely arranged body.

7. Electric machine with a single pole winding in accordance with claim 4,
wherein the pole segments (27) that deviate from the pole pitch of the body arranged oppositely from the air gap occupy the space between two adjacent coils and form a large part of the yoke.

8. Process for the production of an electric machine with a single pole winding and a soft magnetic body that is composed of pole segments (1),
wherein the pole coil, after spooling of the conductor wire, is pressed in a device into a defined form, thereby compressing the conductor wires which subsequently are lying in the slot space.

9. Process for the production of an electric machine with a single pole winding and a soft magnetic body that is composed of pole segments (1),
wherein during spooling the wire of the first layer of a pole coil is arranged in grooves in the pole core.

10. Process for the production of an electric machine with a single pole winding and a soft magnetic body that is composed of pole segments (1),
wherein spooled pole segments are mounted alternatingly with non-spooled pole segments in direction of the slot width into a compact body, and where the pole width of adjacent pole segments is different.

## Revendications

1. Machine électrique a enroulement unipolaire et un corps magnétique doux se composant de segments de pôles (1, 19, 26, 27),
**caractérisée en ce que** les surfaces de segments de pôles, qui limitent le espace de rainure, présentant sillons et dans leur sillons sont arrangés fil de conducteur.

2. Machine électrique a enroulement unipolaire d'après a la revendication 1,
**caractérisée en ce que** sur le côte de front aux segments de pôles (1, 19, 26) sont arrangé de éléments de la côte de front (6) avec approfondissements (7) et leur approfondissements conduisent leur fil (4).

3. Machine électrique a enroulement unipolaire d'après a la revendication 1,
**caractérisée en ce que** les segments de pôle (1) entrent en collision sur leur interne finissant et ce qui présente des superficies de contact (12) sur le place de collision (13) pointes de arrête empochés.

4. Machine électrique a enroulement unipolaire et un corps magnétique doux se composant de segments de pôles (1, 19, 26, 27),
**caractérisée en ce que** voisin segments de pôle (26, 27) exécuter avec différent division polaire et n' que un de deux voisin segments de pôle (26, 27) s'entourant à une bobine à l'occasion de quoi la division polaire de un de les deux segments de pôle (27) en environ correspondant à la division polaire de corps opposé sur l'entrefer et la division polaire de voisin segment de pôle (26) est plus grande ou plus petite.

5. Machine électrique a enroulement unipolaire d'après a la revendication 4,
**caractérisée en ce que** la division polaire de chaque deuxième segment de pôle(26) pour une fraction correspondante à la nombre de la phase la division polaire de corps opposé est plus petite que la division polaire de chaque première segment de pôle(27).

6. Machine électrique a enroulement unipolaire d'après a la revendication 4,
**caractérisée en ce que** le segments de pôle (26) s'entrouvert à une bobine qui se compose de lame magnétique orientés et qui forme une superficie sur l'entrefer, qui en environ correspond à la superficie de pôles de corps opposé.

7. Machine électrique a enroulement unipolaire d'après a la revendication 4,
**caractérisée en ce que** les segments de pôle (27) déclinant à la division polaire de corps opposé sur l'entrefer remplissent l'espace entre deux voisins segments de pôle et forment en majeure partie de conclusion.

8. Procédure de fabrication d'une machine électrique a enroulement unipolaire et un corps magnétique doux se composant de segments de pôles (1),
**caractérisée en ce que** après l'enroulement de fil de conducteur on presse en un dispositif dans une façon définie et le fil de conducteur attaché qui se trouve dans l'espace de rainure est comprimé.

9. Procédure de fabrication d'une machine électrique a enroulement unipolaire et un corps magnétique doux se composant de segments de pôles (1),
**caractérisée en ce que** pendant la bobiner le première couche de bobine de pôle le fil est conduit par des sillons en le coeur de pôle.

10. Procédure de fabrication d'une machine électrique a enroulement unipolaire et un corps magnétique doux se composant de segments de pôles (1),
**caractérisée en ce que** segments de pôle (26) de maniéré bobiné avec segments de pôle (27) de maniéré non-bobiné composé changeant en direction la largeur de la rainure à un compact corps et la largeur de pôle de voisin segments de pôle se diffèrent.
